# EUROPÄISCHE PATENTSCHRIFT

(11) **EP 2 948 748 B1**
(45) Veröffentlichungstag und Bekanntmachung des Hinweises auf die Patenterteilung: **21.09.2016**
(21) Anmeldenummer: 13807961.1
(22) Anmeldetag: 09.12.2013
(51) Int. Cl.: G01B 11/24, G01B 11/25, G01M 17/02, G01B 11/22

(54) **VORRICHTUNG UND VERFAHREN ZUM ÜBERWACHEN UND KALIBRIEREN EINER VORRICHTUNG ZUR MESSUNG DER PROFILTIEFE EINES REIFENS**
DEVICE AND METHOD FOR MONITORING AND CALIBRATING A DEVICE FOR MEASURING THE PROFILE DEPTH OF A TYRE
DISPOSITIF ET PROCÉDÉ POUR LA SURVEILLANCE ET LE CALIBRAGE D'UN DISPOSITIF DE MESURE DE LA PROFONDEUR DES SCULPTURES D'UN PNEU

(30) Priorität: 22.01.2013 DE 102013200919
(43) Veröffentlichungstag der Anmeldung: 02.12.2015
(73) Patentinhaber: Robert Bosch GmbH, 70442 Stuttgart (DE)
(72) Erfinder: NOBIS, Guenter, 72622 Nuertingen (DE); UFFENKAMP, Volker, 71642 Ludwigsburg (DE)
(86) Internationale Anmeldenummer: PCT/EP2013/075904
(87) Internationale Veröffentlichungsnummer: WO 2014/114403

(56) Entgegenhaltungen:
- EP-B1- 1 952 092
- DE-A1- 1 809 459
- DE-A1-102006 062 447
- JP-A- 2008 185 511

## Beschreibung

Die Erfindung betrifft eine Vorrichtung und ein Verfahren zum Überwachen und Kalibrieren einer Vorrichtung zur Messung der Profiltiefe eines Reifens, insbesondere eines Kfz-Reifens.

### Stand der Technik

Zur Messung der Profiltiefe von Reifen sind verschiedene Verfahren zur manuellen oder automatischen Profiltiefenmessung bekannt, die mechanisch oder berührungslos messende Verfahren, sowie Verfahren zur Messung bei stehendem oder bei rollendem Fahrzeug bzw. Reifen umfassen, beispielsweise EP 1 952 092 B1.-

Triangulationsverfahren mit Laserscannern zur Profiltiefenmessung in einem Rollenprüfstand werden beispielsweise in DE 197 05 047 A1 und EP 1 394 503 B1 beschrieben.

DE 10 2006 062 447 A1 misst ebenfalls mittels eines Lichtschnitt-Triangulationsverfahrens einen Bereich des Reifenprofils während der Reifen über einem Spalt abrollt. Das Verfahren sieht vor, eine Beleuchtungslinie quer zur Abrollrichtung des Rades mit Hilfe eines mit hoher Geschwindigkeit rotierenden Prismas über die Profilfläche zu führen. Durch die sich parallel verschiebende Beleuchtungszeile kann der gesamte Ausschnitt des Reifens sequentiell und mit hoher Dichte abgetastet werden, während sich die auf dem Spalt befindliche Reifenoberfläche relativ zur Messvorrichtung im Ruhezustand befindet.

EP 0 469 948 B1, EP 1 952 092 B1 und US 7 578 180 B2 beschreiben weitere Varianten von Triangulationsverfahren zur Profilmessung bei der Überfahrt.

DE 10 2012 224 260 beschreibt eine Vorrichtung zum Vermessen des Profils der Lauffläche eines Reifens mit mehreren Messmodulen, die quer zur Laufrichtung des Reifens nebeneinander angeordnet sind und jeweils eine Beleuchtungseinrichtung und eine Bildaufnahmeeinrichtung umfassen.

In einigen Ausführungsformen sind die Beleuchtungseinrichtungen so ausgebildet, dass sie ein Muster, das mehrere Lichtlinien umfasst, auf das Reifenprofil projizieren. Die Beleuchtungseinrichtungen können dabei insbesondere so ausgebildet sein, dass die einzelnen Lichtlinien des Musters räumlich kodiert sind, so dass sie eindeutig identifizierbar sind. Eine solche eindeutige Identifizierbarkeit der Lichtlinien ist notwendig, um in Verbindung mit einer großen Anzahl an Lichtlinien eine hohe Messgenauigkeit zu erreichen. Eine räumliche Kodierung kann z.B. durch ein geeignet ausgebildetes diffraktives optisches Element, dass ein Linienmuster mit variierendem Linienabstand erzeugt, erreicht werden. Alternativ können auch die Breite der Linien, das Linienmuster und/oder die Linienform variiert werden.

Der Einsatz derartiger Profiltiefenmessgeräte, die auf dem Triangulationsverfahren basieren, zum Beispiel in Einfahrten zu Tankstellen u.Ä., erfordert einen kontinuierlichen Einsatz 24 Stunden/Tag unter rauen Umweltbedingungen wie z.B. Erschütterungen und wechselnden Temperaturen.

Durch die Umwelteinflüsse wird die mechanische Aufhängung der eingesetzten Beleuchtungseinrichtungen und Bildaufnahmeeinrichtungen sowie evtl. weiterer optischer Elemente zur Strahlumlenkung, wie z.B. Spiegel oder Prismen, stark belastet, so dass die werksseitige Kalibrierung unter Umständen nicht mehr als gültig angesehen werden kann. Um die optischen Elemente für hochpräzise Messaufgaben konstruktiv mechanisch langzeitstabil gegen gegenseitige Verkippung, Verdrehung, Verwindung und Verschiebung zu sichern, sind enorme Anforderungen an das Material, die Statik und die konstruktive Auslegung der Aufhängungen und Verbindungen zu stellen.

Es ist eine Aufgabe der Erfindung, eine verbesserte Vorrichtung und ein verbessertes Verfahren zur optischen Messung der Profiltiefe eines Reifens, insbesondere eines Reifens eines Kraftfahrzeuges, bereitzustellen, die es ermöglichen, bei möglichst geringem konstruktivem Aufwand und möglichst geringem Wartungsaufwand über einen möglichst langen Nutzungszeitraum eine hohe Messqualität zur Verfügung zu stellen.

Die Aufgabe wird durch eine Vorrichtung nach dem unabhängigen Patentanspruch 1 und ein Verfahren nach dem unabhängigen Patentanspruch 7 gelöst. Die abhängigen Patentansprüche beschreiben mögliche Ausführungsformen einer erfindungsgemäßen Vorrichtung bzw. eines erfindungsgemäßen Verfahrens.

### Offenbarung der Erfindung

Eine erfindungsgemäße Vorrichtung zum Vermessen des Profils der Lauffläche eines Reifens hat eine Fahrbahnebene, auf der der Reifen während der Durchführung der Messung abrollt und in der wenigstens ein Messschlitz ausgebildet ist. Die Vorrichtung hat auch wenigstens eine Beleuchtungseinrichtung, die so ausgebildet und angeordnet ist, dass sie im Betrieb eine Mehrzahl von Lichtlinien durch den Messschlitz auf das zu vermessende Profil des Reifens projiziert, und wenigstens eine Bildaufnahmeeinrichtung, die zur Aufnahme wenigstens eines Bildes wenigstens eines Bereiches des zu vermessenden Profils ausgebildet ist. Die wenigstens eine Beleuchtungseinrichtung und die wenigstens eine Bildaufnahmeeinrichtung sind so ausgebildet und angeordnet, dass die Beleuchtungsrichtung der Beleuchtungseinrichtung und die Richtung der Bildaufnahme durch die Bildaufnahmeeinrichtung weder parallel zueinander noch orthogonal zur Lauffläche des Reifens ausgerichtet sind. An wenigstens einem Messschlitz ist wenigstens ein Überwachungs- und Kalibrierelement ausgebildet, das wenigstens eine rillenförmige Vertiefung aufweist, deren Öffnung der Beleuchtungseinrichtung und der Bildaufnahmeeinrichtung zugewandt ist.

Ein derartiges, erfindungsgemäßes Überwachungs- und Kalibrierelement ermöglicht es, die durch das Überwachungs- und Kalibrierelement vorgegebene bekannte Geometrie optisch zu erfassen, das erfasste Bild der bekannten Geometrie mit vorab gespeicherten Daten zu vergleichen und auf diese Weise die aktuelle Abbildungsgeometrie der Messvorrichtung zu bestimmen. Veränderungen gegenüber der Werkskalibrierung können so erkannt und durch eine Selbstkalibrierung berücksichtigt und korrigiert werden.

Ein erfindungsgemäßes Verfahren zum Überwachen und Kalibrieren einer Vorrichtung zur optischen Vermessung der Profiltiefe eines Reifens umfasst die Schritte, definiertes Licht auf wenigstens eine erfindungsgemäße Überwachungsund Kalibriervorrichtung zu projizieren und das von der Überwachungs- und Kalibriervorrichtung reflektierte Licht aufzunehmen und, z.B. durch den Vergleich mit vorab gespeicherten Daten, auszuwerten, um aktuelle Kalibrierparameter zu berechnen.

Ein erfindungsgemäßes Überwachungs- und Kalibrierelement bildet gemeinsam mit dem Messschlitz einen dreidimensionalen Objektraum. Das Messfenster der Beleuchtungs- und Bildaufnahmeeinrichtung wird so gewählt, dass sowohl das Überwachungs- und Kalibrierelement als auch der Messschlitz im dreidimensionalen Objektraum enthalten sind. Anhand der bekannten Geometrie des Überwachungs- und Kalibrierelementes kann die durch Umwelteinflüsse ggf. veränderte Zuordnung zwischen Beleuchtungseinrichtung und Bildaufnahmeeinrichtung im dreidimensionalen Objektraum des Messschlitzes kalibriert werden. Diese Zuordnung kann auch weitere optische Elemente zur Strahlumlenkung, wie z.B. Spiegel und Prismen, mit einschließen.

Ein erfindungsgemäßes Verfahren zur Messung der Profiltiefe wenigstens eines Reifens umfasst, vor dem Messen der Profiltiefe ein erfindungsgemäßes Verfahren zum Überwachen und Kalibrieren der Messvorrichtung durchzuführen.

Regelmäßiges Überwachen und Kalibrieren der Messvorrichtung gewährleistet eine konstante Messgenauigkeit über die gesamte Nutzungsdauer der Messvorrichtung.

Wird bei der Profiltiefenmessung eine räumliche Linienkodierung eingesetzt, wie sie zuvor beschrieben worden ist, wird durch eine erfindungsgemäße Selbstüberwachung gewährleistet, dass die Kodierung und Dekodierung der Lichtlinien auch dann noch sicher funktioniert, wenn die Messvorrichtung dejustiert ist und die Lichtlinien gegenüber der werkseitigen Montage versetzt und/oder nicht mehr parallel zur Schlitzlänge sondern verdreht zum Messschlitz projiziert werden. Eine bei der Überwachung ermittelte Dejustage wird bei der Durchführung der Bildanalyse zur eindeutigen Identifikation der einzelnen Linien (Dekodierung) berücksichtigt.

Eine größere Dejustage kann auch dazu führen, dass die Lichtlinien in Fahrtrichtung einen so großen Versatz aufweisen, dass eine oder mehrere Lichtlinien nicht mehr auf den Messschlitz abgebildet werden oder ganz aus dem Blickfeld der Bildaufnahmeeinrichtung verschwinden. Durch eine erfindungsgemäße Selbstüberwachung kann auch kontrolliert werden, wie viele Lichtlinien insgesamt noch sichtbar und für die Auswertung verfügbar sind. Wenn der Versatz der Lichtlinien in Fahrtrichtung so groß ist, dass die Anzahl der auf den Messschlitz abgebildeten Lichtlininen einen vorgegebenen Grenzwert von zum Beispiel 30 Lichtlinien unterschreitet, wird eine manuelle Nachjustage im Rahmen einer Wartung erforderlich und es wird eine entsprechende Serviceinformation generiert. Eine Nachjustage wird auch erforderlich, wenn ein Versatz der Lichtlinien quer zur Fahrtrichtung detektiert wird, so dass der Messschlitz auf einer Seite nicht mehr bis an seinen Rand beleuchtet wird.

Für die Selbstüberwachung und Selbstkalibrierung wird das Messsystem in periodischen Abständen in einen entsprechenden Kalibrier-Messmodus versetzt, vorzugsweise in Messpausen, in denen keine Aktivierung des Messsystems bei einer Annäherung eines Fahrzeugs stattfindet. Im Kalibrier-Messmodus wir der Messschlitz mit Lichtlinien beleuchtet und mindestens ein Bild erfasst und gespeichert. Das wenigstens eine Bild wird in der Mess- und Auswerteeinheit analysiert. Zum einen wird die aktuelle Verschiebung und Verdrehung der Lichtlinien ermittelt und für die Liniendekodierung bereitgestellt. Zum anderen werden die aktuellen Kalibrierparameter berechnet und die Werkskalibrierung wird ggf. überschrieben.

Vorzugsweise findet die Messung zur Überwachung und Kalibrierung statt, wenn nur wenig oder kein Umgebungslicht vorhanden ist, zum Beispiel nachts. Darüber hinaus kann die Messung sehr einfach an das Umgebungslicht angepasst werden, da die Erfassung des Überwachungs- und Kalibrierelementes im Gegensatz zur eigentlich Profiltiefenmessung, die während der Abrollbewegung des Reifens durchgeführt wird, kein dynamischer Vorgang ist und daher ausreichend Zeit für die Messung zur Verfügung steht. Die Mess- und Auswerteeinheit analysiert die Daten des Bildsensors und stellt optimale Parameter für die Beleuchtungseinrichtung (Beleuchtungsintensität) und/oder die Bildaufnahmeeinrichtung (Integrationszeit) bereit, die eine Unter- oder Überbelichtung während der Messung verhindern. Dieser Vorgang kann auch iterativ durchgeführt werden, bis optimale Aufnahmeverhältnisse vorliegen.

Eine Selbstüberwachung und Selbstkalibrierung des Messsystems ermöglicht es, langzeitstabil mit hoher Zuverlässigkeit zu messen. Ein Ausfall der Vorrichtung aufgrund einer nicht mehr möglichen Dekodierung der Lichtlinien oder eine fehlerbehaftete Messung der Profiltiefe aufgrund einer Dejustierung können vermieden werden und die notwendigen Wartungsarbeiten lassen sich auf ein Minimum reduzieren. Eine Messvorrichtung mit Selbstüberwachung und Selbstkalibrierung kann mit kostensparenden, einfach ausgeführten mechanischen Aufhängungen der optischen Elemente ausgebildet sein, da eine mögliche Dejustierung der optischen Elemente durch die Selbstüberwachung erkannt und durch die Selbstkalibrierung ausgeglichen wird.

In einer Ausführungsform beträgt der Winkel zwischen der Richtung, in der die Beleuchtungseinrichtung die Lichtlinie auf den Reifen projiziert und der Bildaufnahmerichtung der zugehörigen Bildaufnahmeeinrichtung mehr als 10° und weniger als 90°, vorzugsweise zwischen 20° und 45°, insbesondere 40°. Ein Winkel im Bereich von 20° bis 45° stellt einen guten Kompromiss zwischen einer möglichst hohen Messgenauigkeit und einer möglichst geringen Abschattung, die beide mit einem größer werdenden Winkel zwischen der Projektionsrichtung der Beleuchtungseinrichtung und der Bildaufnahmerichtung der zugehörigen Bildaufnahmeeinrichtung zunehmen, dar.

In einer Ausführungsform sind die rillenförmigen Vertiefungen des Überwachungs- und Kalibrierelement im Wesentlichen parallel zur Abrollrichtung des Reifens ausgebildet. Parallel zur Abrollrichtung des Reifens ausgebildete rillenförmige Vertiefungen sind besonders gut geeignet, um ein typisches Reifenprofil zu simulieren und ermöglichen daher eine besonders effektive Überwachung und Kalibrierung.

In einer Ausführungsform entsprechen die Breite und/oder die Tiefe der rillenförmigen Vertiefungen der Breite bzw. Tiefe eines typischen Fahrzeugreifens. Derartige Vertiefungen sind besonders gut geeignet, um ein typisches Reifenprofil zu simulieren und ermöglichen daher eine besonders effektive Überwachung und Kalibrierung des Messsystems.

In einem nicht erfinderischen Beispiel sind die rillenförmigen Vertiefungen so wie die Rillen eines typischen Reifenprofils senkrecht zur Fahrbahnebene ausgebildet, so dass sie ein typisches Reifenprofil besonders gut simulieren.

In einer Ausführungsform sind die rillenförmigen Vertiefungen in einem spitzen Winkel zur Fahrbahnebene ausgebildet. Die rillenförmigen Vertiefungen können insbesondere in einer Richtung zur Fahrbahnebene ausgebildet sein, die parallel zur Richtung des im ordnungsgemäßen Zustand von der Beleuchtungseinrichtung ausgesandten und in die rillenförmigen Vertiefungen einfallenden Lichts ist. Durch derartige, schräg ausgebildete rillenförmige Vertiefungen wird eine Abschattung des Grundes der Vertiefungen bei schräg einfallendem Licht reduziert oder vollständig vermieden. Der Verlust von Messinformation wird so verhindert und die Qualität der Überwachung und Kalibrierung kann gesteigert werden.

In einer Ausführungsform sind der Messschlitz und das Überwachungs- und Kalibrierelement einstückig als gemeinsames Element ausgebildet. Durch die Ausbildung als gemeinsames Element weisen der Messschlitz und das Überwachungs- und Kalibrierelement dauerhaft eine fest definierte räumliche Beziehung zueinander auf, so dass dauerhaft eine hohe Qualität der Überwachung und Kalibrierung sichergestellt werden kann.

In einer Ausführungsform sind die wenigstens eine Beleuchtungseinrichtung und die wenigstens eine Bildaufnahmeeinrichtung in einer Überfahrrinne angeordnet und der Messschlitz und das Überwachungs- und Kalibrierelement sind in bzw. an einem Deckel der Fahrrinne ausgebildet.

In einer Ausführungsform weist die Vorrichtung mehrere, quer zur Abrollrichtung nebeneinander angeordnete Messmodule auf, wobei jedes der Messmodule jeweils wenigstens eine Beleuchtungseinrichtung, wenigstens eine Bildaufnahmeeinrichtung, wenigstens einen Messschlitz und wenigstens eine Kalibriervorrichtung aufweist. Ein solcher modularer Aufbau der Messvorrichtung ermöglicht es, die Messvorrichtung optimal an die maximal zu vermessende Reifenbreite anzupassen.

In einer Ausführungsform sind die Messschlitze der Messmodule in Abrollrichtung des Reifens gegeneinander versetzt angeordnet, um eine gegenseitige Störung der Messmodule zu verhindern. Insbesondere kann auf diese Weise verhindert werden, dass von einer Beleuchtungseinrichtung eines Messmoduls ausgesandtes Licht von der Bildaufnahmeeinrichtung eines anderen Messmoduls erfasst wird.

Die Erfindung wird im Folgenden anhand der beigefügten Figuren näher erläutert:

### Kurze Beschreibung der Figuren:

Figur 1 zeigt eine schematische perspektivische Ansicht eines Messplatzes zur Profiltiefenmessung.
Figur 2 zeigt eine seitliche Schnittansicht einer in einer Überfahrrinne angeordneten Vorrichtung zur Profiltiefenmessung.
Figur 3a zeigt eine nicht erfinderische Alternative, mit einem Schnitt senkrecht zur Ebene der Fahrbahn durch das Zentrum des Reifens orthogonal zur Fahrtrichtung des Fahrzeugs.
Figur 3b zeigt einen vergrößerten Ausschnitt des beleuchteten Reifenprofils der Figur 3a.
Figur 4 zeigt einen Ausschnitt einer Messvorrichtung, die mit einem Ausführungsbeispiel einer erfindungsgemäßen Überwachungs- und Kalibriervorrichtung ausgestattet ist.
Figur 5 zeigt die Unterseite eines Ausführungsbeispiels eines Deckels mit mehreren erfindungsgemäßen Überwachungs- und Kalibriervorrichtungen in der Aufsicht.

### Figurenbeschreibung

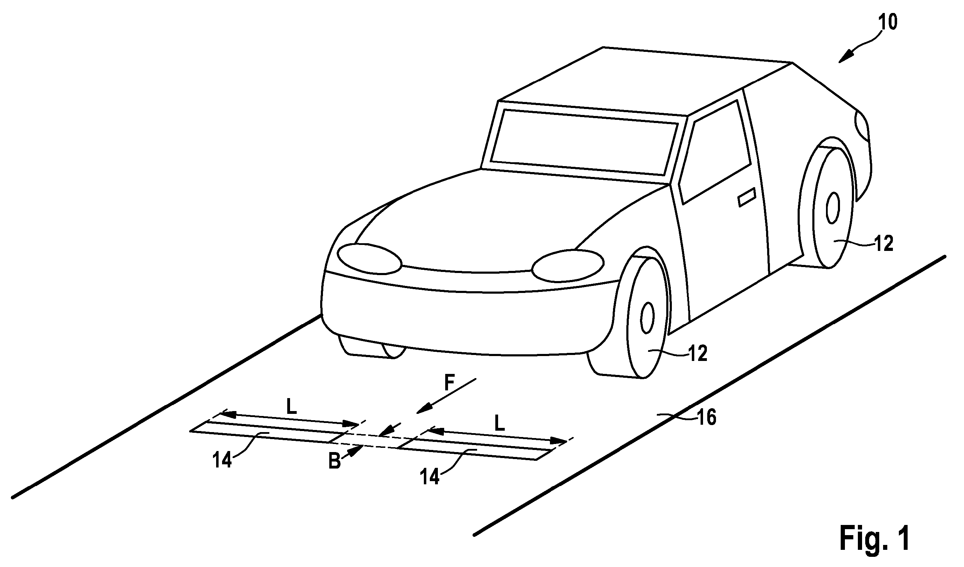

Figur 1 zeigt einen Messplatz zur Profiltiefenmessung mit einer Fahrbahn 16, in der zwei Messschlitze 14 in der Spur eines sich in Fahrtrichtung F nähernden Fahrzeugs 10 ausgebildet sind. Die Messung findet statt, während das Fahrzeug 10 mit seinen Rädern bzw. Reifen 12 über wenigstens einen der zwei länglichen Messschlitze 14 fährt, die in der Fahrbahn 16 ausgebildet und in ihrer Längsausdehnung quer zur Laufrichtung der Reifen 12 des Kraftfahrzeugs 10 ausgerichtet sind.

Die Messschlitze 14 haben quer zur Fahrtrichtung F des Fahrzeugs 10 eine Ausdehnung (Länge) L, die mindestens der Breite der maximalen Aufstandsfläche der zu vermessenden Reifen 12 entspricht. Zusätzlich ist jedoch die Varianz der Spurweiten der zu vermessenden Fahrzeuge 10 zu berücksichtigen, um eine automatische Vermessung einer möglichst großen Zahl unterschiedlicher Fahrzeugtypen zu ermöglichen. Wenn die Messvorrichtung auch für Nutzfahrzeuge geeignet sein soll, ist insbesondere auch die Varianz der Spurweiten und Reifenbreiten von Transportern und LKW mit oder ohne Doppelbereifung zu berücksichtigen.

Die Breite B der Messschlitze 14 parallel zur Fahrtrichtung F ist zum einen deutlich kleiner zu wählen als die kleinste Aufstandsfläche typischer Reifen 12, zum anderen ist die Breite B der Messschlitze 14 auch so zu wählen, dass durch die Überfahrt der Fahrkomfort nicht unangenehm beeinträchtigt wird.

Die Messschlitze 14 ermöglichen es, die Messung der Profiltiefe in einem unbelasteten Teilbereich der Lauffläche des zu prüfenden Reifens 12 durchzuführen. Dies hat den Vorteil, dass Messfehler, die aufgrund der durch die Radlast des Fahrzeugs 10 zwangsläufig hervorgerufenen Quetschung des Reifenmaterials in der Aufstandsfläche des Reifens 12 entstehen würden, vermieden werden.

Darüber hinaus entspricht eine Messung im Bereich der Aufstandsfläche des Reifens 12 quasi einer Messung in Ruhelage, denn jeder Punkt der Lauffläche des Reifens 12 bewegt sich während des Abrollens auf der Fahrbahn 16 entlang einer Zykloiden mit der physikalischen Eigenschaft, dass seine Geschwindigkeit im Aufstandspunkt Null ist. Das hat den Vorteil, dass keine zusätzliche Messunsicherheit durch Bewegungsunschärfe vorhanden ist.

Ein weiterer Vorteil der Messung des aufstehenden Reifenprofils von unten durch einen Messschlitz 14 besteht darin, dass durch die Karosserie des Fahrzeugs 10 und den Reifen 12 selbst das Umgebungslicht zu einem großen Teil abgeschattet wird und die Messung dadurch weitgehend unabhängig von wechselnden Umgebungsbedingungen (wie z.B. Tag, Nacht, Sonne, Wolken, ...) ist.

Für die Vermessung von PKW mit Spurweiten zwischen 1200 mm und 1800 mm in den Einfahrten von Werkstätten, Tankstellen oder Parkplätzen u.ä. unter Annahme einer maximalen Geschwindigkeit von 15 km/h hat sich zum Beispiel auf jeder Fahrzeugseite ein Messschlitz 14 mit einer Länge L zwischen 500 mm und 700 mm und einer Breite B zwischen 30 mm und 50 mm als gut geeignet erwiesen.

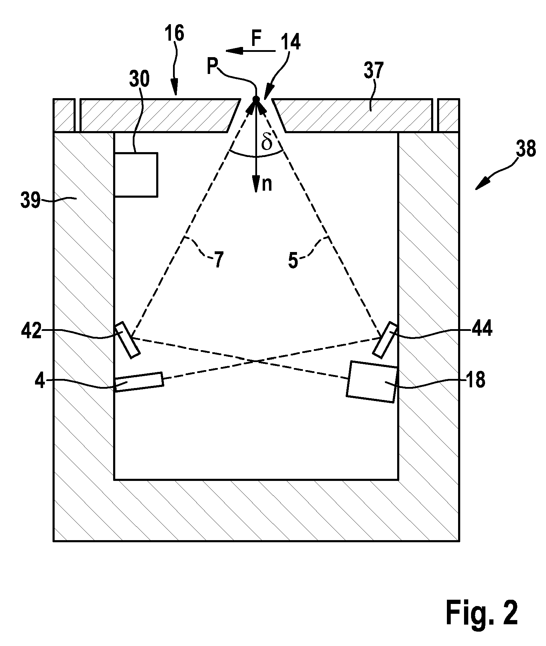

Figur 2 zeigt eine beispielhafte Anordnung zur Messung der Profiltiefe in einem schematischen Querschnitt. Ein erfindungsgemäßes Messsystem kann zweckmäßigerweise in eine Überfahrrinne 38 integriert werden, wie sie aus dem Straßenbau bekannt und bewährt sind.

Eine Beleuchtungseinrichtung 4 und eine Bildaufnahmeeinrichtung 18 sind so in der Überfahrrinne 38 angeordnet, dass der Messbereich der Bildaufnahmeeinrichtung 18 dem Messschlitz 14 in der Fahrbahn 16 entspricht.

Zur Optimierung des verfügbaren Bauraums werden die Bildaufnahme- und die Beleuchtungslinien über Spiegel 42, 44 umgelenkt. Durch eine symmetrische Anordnung der optischen Elemente 4, 18, 42, 44 wird erreicht, dass die Strahllängen für die Beleuchtungseinrichtung 4 und die Bildaufnahmeeinrichtung 18 identisch sind und damit der Fächerwinkel der Lichtebenen 5 der Beleuchtungseinrichtung 4 ebenso groß ist wie der Öffnungswinkel ϕ der Bildaufnahmeeinrichtung 18.

Eine Montage der optischen Elemente 4, 18, 42, 44 sowie der Mess- und Auswerteeinrichtung 30 an einer Seitenwand 39 der Überfahrrinne 38 schützt die optischen Elemente 4, 18, 42, 44 und die Mess- und Auswerteeinrichtung 30 zum Beispiel vor Stauwasser, dass sich am Boden der Überfahrrinne 38 sammelt. Die Montage aller Komponenten 4, 18, 42, 44, 32 des Messsystems an einem Deckel 37 der Überfahrrinne 38 ermöglicht es, die Komponenten 4, 18, 42, 44, 32 einfach zu warten und/oder auszutauschen.

Die in der Figur 2 gezeigte Anordnung der Beleuchtungseinrichtung 4 und der Bildaufnahmeeinrichtung 18 hat zusätzlich den Vorteil, dass die Einrichtungen 4, 18 gut vor ggf. durch den Messschlitz 14 herabfallendem Schmutz geschützt sind.

Die Beleuchtungseinrichtung 4 und die zugehörige optische Komponente 44 werden so ausgerichtet, dass die von der Beleuchtungseinrichtung 4 erzeugten Lichtlinien 6 parallel oder nahezu parallel zur Längsseite des Messschlitzes 14 quer zur Fahrtrichtung F des Fahrzeugs 10 bzw. zur Laufrichtung des Reifens 12 auf dessen Lauffläche projiziert werden.

Der Winkel δ bezeichnet den Winkel zwischen der Ebene 5, in der das Licht von der Beleuchtungseinrichtung 4 auf das Reifenprofil gestrahlt wird, und der Abbildungsebene 7 am Objektpunkt P.

Das beschriebene Messprinzip verlangt eine feste, unveränderliche Zuordnung zwischen dem Objekt, der Beleuchtungseinrichtung 4 und der

Bildaufnahmeeinrichtung 18. Durch das Vermessen des unbelasteten Teilbereichs der Reifenaufstandsfläche durch den Messschlitz 14 in der Fahrbahn 16 ist gewährleistet, dass die Tiefenausdehnung des Reifenprofils, oder anders gesprochen, der Normalenvektor n des Reifens 12, für jeden Reifen 12 zum Zeitpunkt der Messung eine identische Ausrichtung aufweist. In dieser Anordnung ist das Messsystem auch zu kalibrieren.

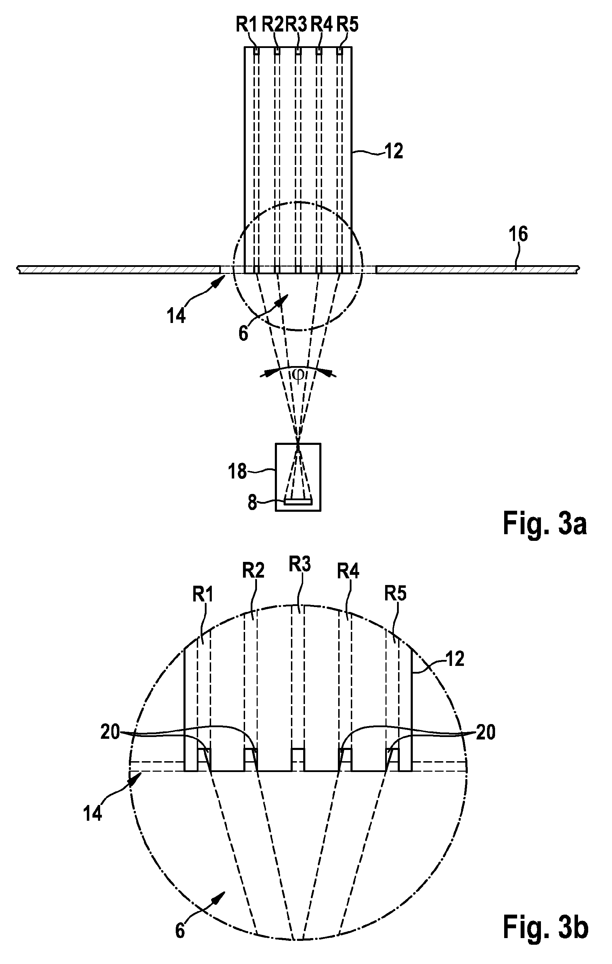

Figur 3a zeigt einen Schnitt senkrecht zur Ebene der Fahrbahn 16 durch die Mitte des Reifens 12 orthogonal zur Fahrtrichtung F des Fahrzeugs 10 in einer schematischen Darstellung. Das Profil des Reifens 12 ist beispielhaft in vereinfachter Form mit fünf Längsrillen R1, R2, R3, R4, R5 dargestellt. Eine von der (in Figur 3a nicht dargestellten) Beleuchtungseinrichtung 4 auf das Profil des Reifens 12 projizierte Lichtlinie 6 wird auf einen Flächenbildsensor 8 der Bildaufnahmeeinrichtung 18 projiziert und von diesem aufgenommen.

Die vergrößerte Darstellung des Reifenprofils in der Figur 3b verdeutlicht, dass, abhängig von der Breite und Tiefe der Rillen R1, R2, R3, R4, R5, bei der Projektion der Lichtlinien 6 mit zunehmendem Öffnungswinkel ϕ der Bildaufnahmeeinrichtung 18 Abschattungen 20 auftreten, die ab einem bestimmten Öffnungswinkel ϕ eine Profiltiefenmessung unmöglich machen, da der Grund der Rillen R1, R2, R3, R4, R5 nicht oder nur noch unzureichend beleuchtet wird.

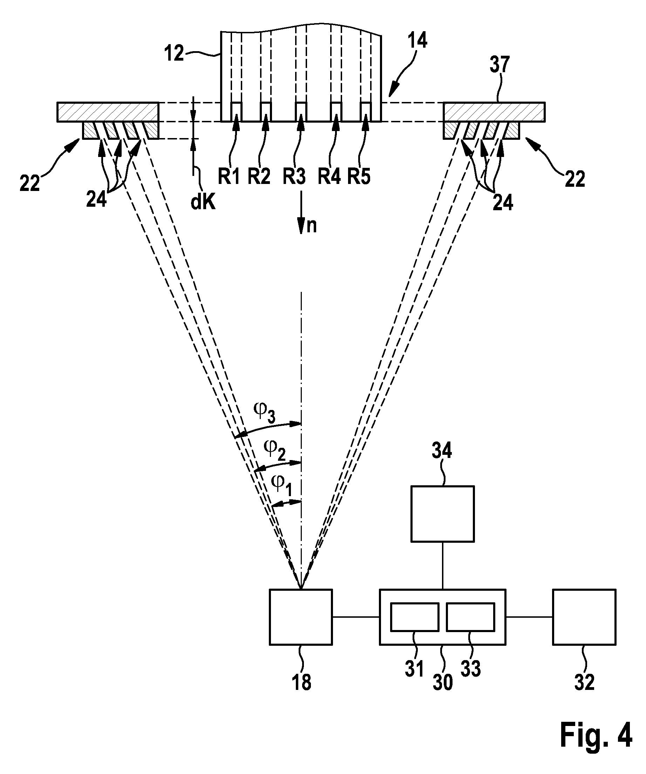

Figur 4 zeigt eine Schnittdarstellung einer Messvorrichtung, die mit einem Ausführungsbeispiel einer erfindungsgemäßen Überwachungs- und Kalibriervorrichtung ausgestattet ist.

Die Überwachungs- und Kalibriervorrichtung umfasst zwei Überwachungs- und Kalibrierelemente 22, die in dem gezeigten Ausführungsbeispiel rechts und links eines Messschlitzes 14 an dem Deckel 37 einer (in der Figur 4 nicht gezeigten) Überfahrrinne 38 angebracht sind und jeweils drei rillenförmige Vertiefungen 24 aufweisen, die sich analog zu den Längsrillen R1, R2, R3, R4, R5 eines typischen Fahrzeugreifens 12 im Wesentlichen parallel zur Fahrtrichtung F des Fahrzeugs 10 senkrecht zur Zeichenebene erstrecken. Die Breite und die Tiefe der rillenförmigen Vertiefungen 24 entsprechen in etwa denen eines typischen Profils eines Fahrzeugreifens 12.

Eine Mess- und Auswerteeinheit 30, die elektrisch oder drahtlos mit der Bildaufnahmeeinrichtung 18 verbunden und mit einer Rechnereinheit 31, einer Speichereinheit 33 und einer Auswertesoftware ausgestattet ist, führt die Analyse der von der Bildaufnahmeeinrichtung 18 zur Verfügung gestellten Bilddaten, die Überwachung der Justierung, die Selbstkalibrierung, die Berechnung der Fahrgeschwindigkeit des Fahrzeugs 10 und die Bildanalyse zur Unterscheidung des Reifentyps, zur Berechnung der Profiltiefe durch. Die Mess- und Auswerteeinheit 30 kann auch eine Profiltiefenabweichung und flächenhaften Profilstrukturje Reifen, die relative Abweichung der Profiltiefen und Profiltiefenabweichung der Räder an jeder Achse berechnen, die Profiltiefe, Profiltiefenabweichung und Profilstruktur für jeden Reifen anhand definierter Grenzwerte bewerten, die relativen Abweichung und die Differenz der Profiltiefenabweichung der Räder einer Achse anhand definierter Grenzwerte bewerten, sowie eine zusammenfassende Bewertung des Reifenzustands durchführen. Die Mess- und Auswerteeinheit 30 steuert auch eine Anzeigeeinheit 32 zur Ausgabe der Prüfergebnisse sowie bei Bedarf die Übertragung der Mess- und Prüfergebnisse an einen übergeordneten Server 34.

Wie bereits im Zusammenhang mit den Figuren 3a und 3b erwähnt, treten abhängig von der Breite und der Tiefe der rillenförmigen Vertiefungen 24 und vom Öffnungswinkel ϕ₁, ϕ₂, ϕ₃ der Beleuchtungs- und Bildaufnahmeeinrichtungen 4, 18 Abschattungen 20 des Grundes rillenförmigen Vertiefungen 24 auf, die zu einer Reduzierung der zur Verfügung stehenden Messinformation und in der Folge zu Einbußen der Messgenauigkeit führen. Dies trifft insbesondere für Überwachungs- und Kalibrierelemente 22 zu, die links- und rechtsseitig des Messschlitzes 14 angeordnet sind, da hier der Öffnungswinkel ϕ₃ am größten ist.

Um das Ausmaß der Abschattungen 20 gering zu halten und so die für die Überwachung und Kalibrierung zur Verfügung stehende Messinformation zu vergrößern, kann die Breite des Messschlitzes 14 verkleinert, die Breite der rillenförmigen Vertiefungen 24 vergrößert und/oder die Tiefe der rillenförmigen Vertiefungen 24 verringert werden.

In dem in der Figur 4 gezeigten Ausführungsbeispiel sind die rillenförmige Vertiefungen 24 der Überwachungs- und Kalibrierelemente 22 nicht wie die Rillen R1, R2, R3, R4, R5 eines typischen Reifenprofils senkrecht zur Ebene der Fahrbahn 16, d.h. parallel zum Normalenvektor n des Reifens 12, sondern als schräg eingeschnittene rillenförmige Vertiefungen 24 ausgebildet. Dadurch kann das Ausmaß der Abschattungen 20 reduziert werden. Vorzugsweise wird die Neigung der rillenförmigen Vertiefungen 24 relativ zur Ebene der Fahrbahn 16 auf den Öffnungswinkel ϕᵢ der Beleuchtungs- und Bildaufnahmeeinrichtungen 4, 18 abgestimmt. Auf diese Weise kann erreicht werden, dass der Grund jeder rillenförmigen Vertiefung 24 des Überwachungs- und Kalibrierelementes 22 komplett beleuchtet und auf dem Flächenbildsensor 8 der Bildaufnahmeeinrichtung 18 abgebildet wird. Abschattungen 20 werden reduziert oder sogar vollständig vermieden und die bestmögliche Messinformation kann zur Überwachung und Kalibrierung verwendet werden. Die Differenz in der Tiefe dK zwischen Aufstandsfläche des Reifens 12 und der Oberfläche des Überwachungs- und Kalibrierelementes 22 ist bekannt und wird bei der Auswertung berücksichtigt.

Um dauerhaft eine zuverlässige Überwachung und Kalibrierung zu ermöglichen, ist es vorteilhaft, wenn der Messschlitz 14 und das wenigstens eine Überwachungs- und Kalibrierelement 22 eine langzeitstabile Einheit bilden, so dass die Position des Überwachungs- und Kalibrierelements 22 in Bezug auf den Messschlitz 14 unveränderlich ist. In dem gezeigten Ausführungsbeispiel sind die Überwachungs- und Kalibrierelemente 22 daher gemeinsam mit dem Deckel 37, in dem der Messschlitz 14 ausgebildet ist, aus einem Stück gefertigt, so dass eine Veränderung der Position der Überwachungs- und Kalibrierelemente 22 relativ zu dem Messschlitz 14 ausgeschlossen ist.

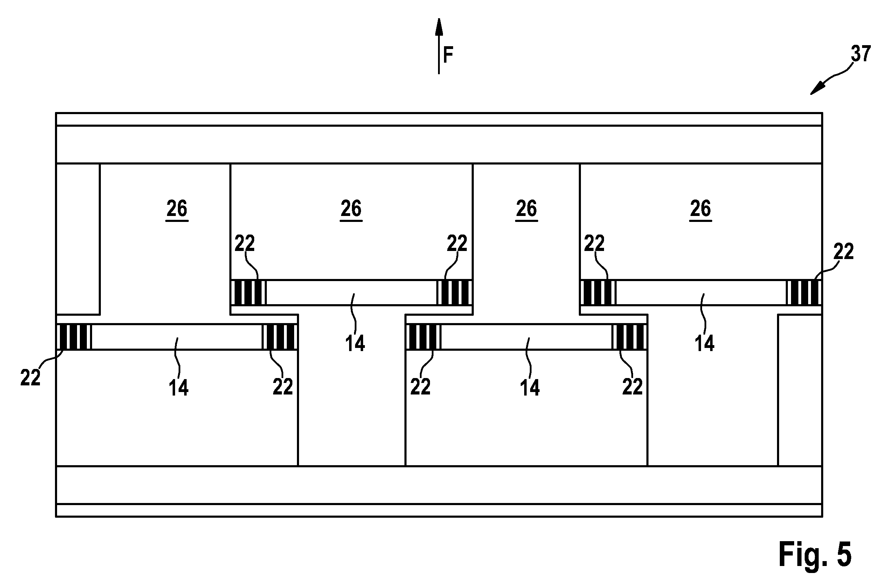

Figur 5 zeigt die Unterseite eines Ausführungsbeispiels eines solchen Deckels 37 in der Aufsicht. Der Deckel 37 umfasst vier quer zur Fahrtrichtung F nebeneinander angeordnete und identisch ausgebildete Elemente 26, wobei einander benachbarte Elemente 26 in einer jeweils um 180° gegeneinander gedrehten Orientierung ausgerichtet sind. Die Elemente 26 sind derart ausgebildet, dass die Messschlitze 14 in Fahrtrichtung F gegeneinander versetzt angeordnet sind. Am linken und rechten Rand jedes der Messschlitze 14 ist jeweils ein Überwachungs- und Kalibrierelement 22 angeordnet, wie es zuvor beschrieben worden ist.

Durch eine derartige versetze Anordnung der Messschlitze 14 kann eine gegenseitig Störung der Messungen verhindert werden, da ausgeschlossen werden kann, dass von einer Beleuchtungseinrichtung 4, die einem ersten Messschlitz 14 zugeordnet ist, ausgesandtes Licht von einer Bildaufnahmeeinrichtung 18, die einem zweiten Messschlitz 14 zugeordnet ist, erfasst wird und die Auswertung zur Überwachung und Kalibrierung erschwert oder sogar verhindert.

## Patentansprüche

1. Vorrichtung zum Vermessen des Profils der Lauffläche eines Reifens (12) mit
einer Fahrbahnebene zum Abrollen des Reifens (12), in der wenigstens ein Messschlitz (14) ausgebildet ist,
wenigstens einer Beleuchtungseinrichtung (4), die so ausgebildet und angeordnet ist, dass sie im Betrieb eine Mehrzahl von Lichtlinien (6) durch den Messschlitz (14) auf das zur vermessende Profil projiziert, und
wenigstens einer Bildaufnahmeeinrichtung (18), die zur Aufnahme wenigstens eines Bildes wenigstens eines Bereiches des zu vermessenden Profils ausgebildet ist,
wobei die wenigstens eine Beleuchtungseinrichtung (4) und die wenigstens eine Bildaufnahmeeinrichtung (18) so ausgebildet und angeordnet sind, dass die Beleuchtungsrichtung der Beleuchtungseinrichtung (4) und die Bildaufnahmerichtung der Bildaufnahmeeinrichtung (18) weder parallel zueinander noch orthogonal zur Lauffläche des Reifens (12) ausgerichtet sind,
wobei, dass
an wenigstens einem Messschlitz (14) wenigstens eine Überwachungs-und Kalibriervorrichtung (22) ausgebildet ist, wobei die Überwachungs- und Kalibriervorrichtung (22) wenigstens eine Vertiefung (24) aufweist, deren offene Seite der Beleuchtungseinrichtung (4) und der Bildaufnahmeeinrichtung (18) zugewandt ist,
**dadurch gekennzeichnet, dass** die wenigstens eine Vertiefung (24) in einem spitzen Winkel zur Ebene der Fahrbahn (16) ausgebildet ist, wobei die wenigstens eine Vertiefung (24) insbesondere in einem Winkel zur Ebene der Fahrbahn (16) ausgebildet ist, die parallel zur Richtung eines im ordnungsgemäßen Zustand von der Beleuchtungseinrichtung (4) ausgesandten und in die Vertiefung (24) einfallenden Lichtstrahls ist.

2. Vorrichtung nach Anspruch 1, wobei die wenigstens eine Vertiefung (24) als rillenförmige Vertiefung (24) ausgebildet ist, die sich parallel zur Abrollrichtung des Reifens (12) erstreckt.

3. Vorrichtung nach Anspruch 1 oder 2, wobei die Breite und/oder Tiefe der wenigstens einen Vertiefung (24) der Breite bzw. Tiefe des Profils eines typischen Fahrzeugreifens (12) entsprechen.

4. Vorrichtung nach einem der vorangehenden Ansprüche, wobei der Messschlitz (14) und die Überwachungs- und Kalibriervorrichtung (22) einstückig als Bestandteile eines gemeinsamen Elementes (37) ausgebildet sind.

5. Vorrichtung nach Anspruch 5, wobei die wenigstens eine Beleuchtungseinrichtung (4) und die wenigstens eine Bildaufnahmeeinrichtung (18) in einer Überfahrrinne (38) angeordnet sind und der Messschlitz (14) und die Überwachungs- und Kalibriervorrichtung (22) insbesondere in einem Deckel (37) der Überfahrrinne (38) ausgebildet sind.

6. Vorrichtung nach einem der vorangehenden Ansprüche, wobei die Vorrichtung mehrere, quer zur Abrollrichtung nebeneinander angeordnete Messmodule aufweist, wobei jedes der Messmodule jeweils wenigstens eine Beleuchtungseinrichtung (4), wenigstens eine Bildaufnahmeeinrichtung (18), wenigstens einen Messschlitz (14) und eine Überwachungs- und Kalibriervorrichtung (22) aufweist, wobei die Messschlitze (14) der Messmodule insbesondere in der Abrollrichtung des Reifens (12) gegeneinander versetzt angeordnet sind.

7. Verfahren zum Überwachen und Kalibrieren einer Vorrichtung nach einem der vorangehenden Ansprüche, wobei das Verfahren umfasst:
ein definiertes Lichtmuster auf die wenigstens eine Kalibriervorrichtung (22) zu projizieren;
von der Überwachungs- und Kalibriervorrichtung (22) reflektiertes Licht mit der Bildaufnahmeeinrichtung (18) aufzunehmen und auszuwerten, um aktuelle Kalibrierparameter zu berechnen.

8. Verfahren zur Messung der Profiltiefe wenigstens eines Reifens (12) mit einer Vorrichtung nach einem der vorangehenden Ansprüche, wobei das Verfahren umfasst, periodisch ein Verfahren zum Überwachen und Kalibrieren der Vorrichtung nach Anspruch 8 durchzuführen.

## Claims

1. Device for measuring the profile of the tread of a tyre (12) having
an underlying surface plane for the tyre (12) to roll on, in which plane at least one measuring slit (14) is formed,
at least one lighting device (4) which is embodied and arranged in such a way that during operation it projects a multiplicity of light lines (6) through the measuring slit (14) onto the profile to be measured, and
at least one image-recording device (18) which is designed to record at least one image of at least one region of the profile to be measured,
wherein the at least one lighting device (4) and the at least one image-recording device (18) are embodied and arranged in such a way that the lighting direction of the lighting device (4) and the image-recording direction of the image-recording device (18) are oriented neither parallel to one another nor orthogonal to the tread of the tyre (12),
wherein
that at least one monitoring and calibration device (22) is formed on at least one measuring slit (14), wherein the monitoring and calibration device (22) has at least one depression (24) whose open side faces the lighting device (4) and the image-recording device (18),
**characterized in that** the at least one depression (24) is formed at an acute angle to the plane of the underlying surface (16), wherein the at least one depression (24) is formed at least at an angle to the plane of the underlying surface (16) which is parallel to the direction of a light beam which is emitted by the lighting device (4) in the satisfactory state and is incident in the depression (24).

2. Device according to Claim 1, wherein the at least one depression (24) is embodied as a groove-shaped depression (24) which extends parallel to the rolling direction of the tyre (12).

3. Device according to Claim 1 or 2, wherein the width and/or depth of the at least one depression (24) correspond to the width or depth of a profile of a typical vehicle tyre (12).

4. Device according to one of the preceding claims, wherein the measuring slit (14) and the monitoring and calibration device (22) are embodied in one piece as components of a common element (37).

5. Device according to Claim 5, wherein the at least one lighting device (4) and the at least one image-recording device (18) are arranged in a drive-over groove (38), and the measuring slit (14) and the monitoring and calibration device (22) are formed, in particular, in a cover (37) of the drive-over groove (38).

6. Device according to one of the preceding claims, wherein the device has a plurality of measuring modules arranged one next to the other transversely with respect to the rolling direction, wherein each of the measuring modules has in each case at least one lighting device (4), at least one image-recording device (18), at least one measuring slit (14) and a monitoring and calibration device (22), wherein the measuring slits (14) of the measuring modules are arranged offset with respect to one another, in particular in the rolling direction of the tyre (12).

7. Method for monitoring and calibrating a device according to one of the preceding claims, wherein the method comprises:
projecting a defined light pattern onto the at least one calibration device (22);
recording light reflected by the monitoring and calibration device (22) with the image-recording device (18) and evaluating it in order to calculate current calibration parameters.

8. Method for measuring the profile depth of at least one tyre (12) with a device according to one of the preceding claims, wherein the method comprises periodically carrying out a method for monitoring and calibrating the device according to Claim 8.

## Revendications

1. Dispositif de mesure du profil de la bande de roulement d'un pneu (12), comprenant
un plan de voie de circulation destiné au roulement du pneu (12), dans lequel est configurée au moins une fente de mesure (14),
au moins un appareil d'éclairage (4), lequel est configuré et disposé de telle sorte qu'en fonctionnement, il projette une pluralité de lignes de mesure (6) à travers la fente de mesure (14) sur le profil à mesurer, et
au moins un appareil d'enregistrement d'images (18) qui est configuré pour enregistrer au moins une image d'au moins une zone du profil à mesurer,
l'au moins un appareil d'éclairage (4) et l'au moins un appareil d'enregistrement d'images (18) étant configurés et disposés de telle sorte que la direction d'éclairage de l'appareil d'éclairage (4) et la direction d'enregistrement d'image de l'appareil d'enregistrement d'images (18) ne sont orientées ni parallèlement l'une à l'autre, ni orthogonalement à la bande de roulement du pneu (12), que
au moins un dispositif de surveillance et de calibrage (22) étant configuré sur au moins une fente de mesure (14), le dispositif de surveillance et de calibrage (22) possédant au moins un creux (24) dont le côté ouvert fait face à l'appareil d'éclairage (4) et à l'appareil d'enregistrement d'images (18),
**caractérisé en ce que** l'au moins un creux (24) est configuré avec un angle aigu par rapport au plan de la voie de circulation (16), l'au moins un creux (24) étant notamment configuré avec un angle par rapport au plan de la voie de circulation (16) qui est parallèle à la direction d'un rayon lumineux émis dans l'état en bonne et due forme de l'appareil d'éclairage (4) et incident dans le creux (24).

2. Dispositif selon la revendication 1, l'au moins un creux (24) étant configuré sous la forme d'un creux (24) en forme de gorge qui s'étend parallèlement à la direction de roulement du pneu (12).

3. Dispositif selon la revendication 1 ou 2, la largeur et/ou la profondeur de l'au moins un creux (24) correspondant à la largeur ou à la profondeur du profil d'un pneu de véhicule (12) type.

4. Dispositif selon l'une des revendications précédentes, la fente de mesure (14) et le dispositif de surveillance et de calibrage (22) étant réalisés d'un seul tenant en tant que composants d'un élément commun (37).

5. Dispositif selon la revendication 5, l'au moins un appareil d'éclairage (4) et l'au moins un appareil d'enregistrement d'images (18) étant disposés dans une rigole de franchissement (38) et la fente de mesure (14) et le dispositif de surveillance et de calibrage (22) étant notamment formés dans un couvercle (37) de la rigole de franchissement (38).

6. Dispositif selon l'une des revendications précédentes, le dispositif possédant plusieurs modules de mesure disposés les uns à côté des autres transversalement à la direction du roulement, chacun des modules de mesure possédant respectivement au moins un appareil d'éclairage (4), au moins un appareil d'enregistrement d'images (18), au moins une fente de mesure (14) et un dispositif de surveillance et de calibrage (22), les fentes de mesure (14) des modules de mesure étant disposées de façon décalées les unes par rapport aux autres, notamment dans la direction du roulement du pneu (12).

7. Procédé de surveillance et de calibrage d'un dispositif selon l'une des revendications précédentes, le procédé comprenant :
la projection d'un motif lumineux défini sur l'au moins un dispositif de calibrage (22) ;
l'enregistrement et l'interprétation de la lumière reflétée par le dispositif de surveillance et de calibrage (22) avec l'appareil d'enregistrement d'images (18) afin de calculer les paramètres de calibrage actuels.

8. Procédé de mesure de la profondeur de profil d'au moins un pneu (12) avec un dispositif selon l'une des revendications précédentes, le procédé comprenant la mise en oeuvre périodique d'un procédé de surveillance et de calibrage du dispositif selon la revendication 8.
